**Europäisches Patentamt**

**European Patent Office**

**Office européen des brevets**

(19)

(11) Publication number: **0 165 015**
**A2**

(12)

# EUROPEAN PATENT APPLICATION

(21) Application number: **85303984.0**

(22) Date of filing: **05.06.85**

(51) Int. Cl.⁴: $G\ 02\ B\ 5/22$

(30) Priority: **06.06.84 JP 116084/84**

(43) Date of publication of application:
**18.12.85 Bulletin 85/51**

(84) Designated Contracting States:
**DE FR GB NL**

(71) Applicant: **NEC CORPORATION**
**33-1, Shiba 5-chome, Minato-ku**
**Tokyo 108(JP)**

(72) Inventor: **Matsumara, Fumio c/o NEC Corporation**
**33-1 Shiba 5-chome Minato-ku**
**Tokyo(JP)**

(74) Representative: **Pears, David Ashley et al,**
**REDDIE & GROSE 16 Theobalds Road**
**London WC1X 8PL(GB)**

(54) Light attenuation element.

(57) On a glass substrate (1) there are deposited a first metal film (2) and a second metal film (3). One metal (e.g. Cr) attenuates more strongly at short wavelengths than long wavelengths. The other metal (e.g. Ni) attenuates more strongly at long wavelengths than short wavelengths. The relative thickness of the films can be controlled to achieve a high degree of uniformity of attenuation over a wavelength range, such as 700 to 1400 nm while the absolute thickness can be controlled to achieve the desired attenuation factor.

FIG.1

# LIGHT ATTENUATION ELEMENT

The present invention relates to a light attenuation element for light attenuators used in optical communication.

A light attenuator is an optical device which uniformly attenuates optical signals over a given range of wavelength and is indispensable in optical communications systems for adjusting the light receiving level, measuring the dynamic range of detectors, etc. A light attenuator is fabricated by incorporating a light attenuation element which comprises a transparent substrate coated with a deposited film.

Conventionally, a light attenuation element comprising a glass substrate which is coated with metal deposited film has been used as a neutral density filter (ND filter) for cameras. In fabrication of ND filters, an alloy of chrome (Cr) and nickel (Ni) was used as a material for metal deposition as it is said to be relatively less dependent on the wavelength in terms of light attenuation.

In devices such as cameras which are not used for measurements, a light attenuation element is not so strictly required to have a small wavelength dependency for attenuation. Because of its purpose, however, requirements as to the dependency of light attenuation on wavelength

- 2 -

0165015

and the amount of attenuated light are strictly specified for elements in optical communications system, and the conventional light attenuation element having Cr-Ni metal deposited film hardly meets the requirements.

Cr-Ni film was used in the conventional method because it was intended to obtain uniform light attenuation/wavelength characteristics by the combined use of two metals having opposite characteristics as the deposition material. More particularly, a film of deposited alloy of Cr which has a higher attenuation characteristic on the side of shorter wavelength than that of longer wavelength and of Ni which has the reversed characteristic is used to offset the characteristics, thereby achieving even light attenuation.

With Cr and Ni, however, the vapor pressure differs by ten-fold, for example at 1500°K, the pressure is $10^{-4}$ Torr with Cr whereas it is $10^{-5}$ Torr with Ni. When a Cr-Ni alloy is used as a deposition film material, the ratio of composition will vary in the course of deposition. It therefore becomes extremely difficult to determine the composition of the alloy material for obtaining an evaporated film of desired properties. The composition in practice has to be determined empirically from conditions of fabrication apparatus and process. As a matter of fact, there has been observed a difference by more than 5 dB at wavelength ranging from 850 to 1300 nm where an attenuation of 50 dB is intended.  It has also been difficult to obtain prescribed amounts of light attenuation.

The present invention aims to obviate the defects mentioned above and to provide a light attenuation element which is less dependent on wavelength in attaining an arbitrary amount of light attenuation.

The light attenuation element according to the present invention has a multi-layer structure which comprises at least two layers of films having different characteristics, the films being formed separately and laminated alternately. One of the two films has the characteristic that the light attenuation in the side of shorter wavelength is greater than that of the longer wavelength, whereas the other has the characteristic that the attenuation in the side of longer wavelength is greater than that of the shorter wavelength.

Each film is deposited by evaporation separately. Since optical characteristics of at least two film layers are combined to synthesize an optical characteristic which meets the requirement, it becomes easier to determine the conditions for depositing film by evaporation and the difficulties encountered in the prior art can be obviated.

Brief Description of the Drawings

Fig. 1 is a sectional view of a light attenuation element according to the present invention.

Fig. 2 is a graph to show wavelength dependency of Cr-film and Ni-film respectively in attaining attenuation.

Fig. 3 is a graph to show wavelength dependency of the attenuation element according to the present invention (solid line) and that of the Cr-Ni alloy films of the prior art (broken line).

Detailed Description of the Preferred Embodiment

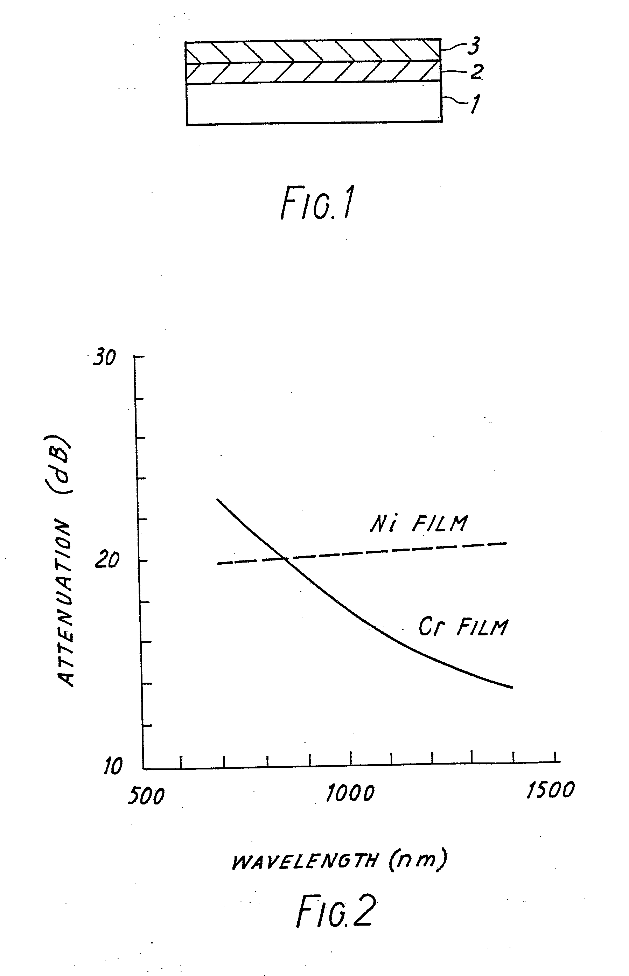

Fig. 1 shows the structure of one embodiment according to the present invention. In this embodiment, the combination of metal deposited film consists of two layers. Cr is deposited by evaporation on a glass substrate 1 to form a Cr-film 2, on which Ni is deposited to form a Ni-film 3.

In order to explain the optical characteristics of the thus obtained light attenuation element, wavelength dependencies of Cr-film and Ni-film in light attenuation are shown in Fig. 2. The films used in the figure are given a thickness such that a light attenuation of 20 dB can be attained. The Cr-film allows greater attenuation in the shorter wavelength than in the longer wavelength. It is also seen from the figure that Ni-film attenuates less light in the shorter wavelength than the longer wavelength. Since Cr-film and Ni-film are opposite in their wavelength characteristics, it is considered that if the ratio of light attenuation between the two films is appropriately set to allow desired amount of attenuation and then each film is separately formed and laminated, attenuation/wavelength characteristics can be made uniform over any arbitrary range of wavelength.

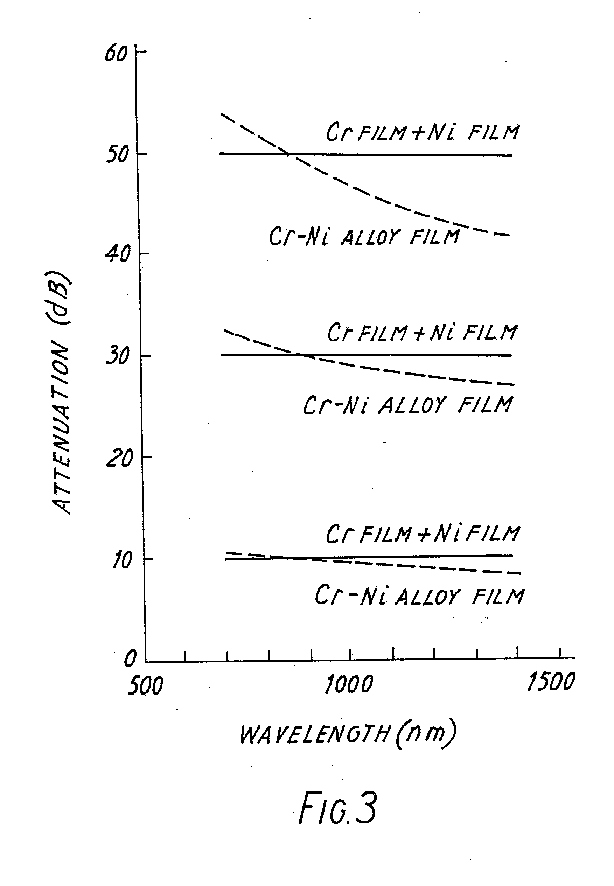

Based on the wavelength characteristics of Cr and Ni films shown in Fig. 2, the light attenuations of Cr-film and Ni-film are respectively set at (1) (2 dB, 8 dB), (2) (3 dB, 27 dB), and (3) (5 dB, 45 dB) so as to attain a light attenuation element having a attenuation of (1) 0 dB, (2) 30 dB and (3) 50 dB at a wavelength of 850 nm. (In the above parentheses, the first figure represents light attenuation of Cr-film and the second that of Ni-film.) The wavelength characteristic of each light attenuation element is calculated and plotted in Fig. 3. For comparison, light attenuation by a Cr-Ni alloy film actually measured is shown by a broken line. With a light attenuation element set for 50 dB, a deviation by 8 dB over the wavelength of 850 - 1300 nm is measured in the alloy film. With an element having a two-layer structure of separately formed Cr and Ni films, it is computationally possible to reduce it to 0.5 dB.

The effectiveness of the light attenuation element according to the present invention will now be described based on the result of experiment. The light attenuation element having a two-layer structure of Cr-film and Ni-film is compared with a conventional light attenuation element made of Cr-Ni alloy (ratio by weight: 1 : 9) as to their characteristics. As a substrate, an BK 7 glass plate of 10 mm diameter and 1 mm thickness was used. Cr and Ni, each having a purity of 99.9% and a Cr-Ni alloy (ratio by weight: 1 : 9) were used as the material for deposition, which was conducted in vacuum of less than $5 \times 10^{-5}$ Torr, at acceleration voltage of 3 KV and an operational current of 100 mA, using an electron gun. The substrate is heated at 130°C $\pm$ 10°C.

The multi-layer element of Cr and Ni films is formed by first depositing a Cr-film and then a Ni-film. Attenuation by the Cr-film is set at 2 - 4 dB, which is smaller than attenuation set for Ni-film. The evaporation is carried out in that order because Cr-film is more adhesive to the glass plate than Ni-film. Light attenuation borne by Cr-film is set smaller because, as Cr-film shows a greater attenuation change in change of the wavelength as compared with Ni-film, it is easier to realize a light attenuation element having a better wavelength characteristic if Cr-film is made thinner than Ni-film.

In the embodiment described below, deposition of Cr-film is conducted so as to obtain an attenuation of 3 dB at the wavelength of 850 nm, followed by deposition of Ni-film to such a thickness as to obtain an attenuation originally intended.

Amount of attenuation at the time of deposition is controlled by means of a quartz film thickness monitor arranged in the vacuum chamber. Attenuation was so controlled that attenuation of 5 dB would correspond to a deviation of about 20 KHz in frequency of the quartz film thickness monitor. The distance between the source of deposition and the glass plate was about 30 cm. Deposition by evaporation was conducted while rotating at 10 rpm the evaporation mask on which the glass plate was fixed.

Light attenuation elements intended for a light attenuation of 5 dB, 15 dB and 20 dB respectively which were constructed on trial basis had the following characteristics. Attenuation at 850 nm was 5.7 dB, 12.9 dB and 18.5 dB respectively as against the targeted amount of 5 dB, 15 dB and 20 dB. Attenuation at 1300 nm was 5.68 dB, 12.95 dB and 17.9 dB respectively and the deviation was less than 1 dB. The measurements were conducted using an optical power meter which utilizes a light emitting diode as the light source and germanium photo-diode as the light receiving element. Ten light attenuation elements were measured to obtain a mean value.

- 8 -

0165015

A light attenuation element of the conventional Cr-Ni film for light attenuation of 20 dB was also fabricated simultaneously. Attenuation reached 22.8 dB at 850 nm and 18.5 dB at 1300 nm. The deviation was about 4.5 dB.

As has been described in the foregoing, optical characteristics such as the level of attenuation and wavelength characteristics can be determined for each layer of film independently without affecting the other during the fabrication process. As a result, a light attenuation element can be made to have an arbitrary level of attenuation and excellent attenuation/wavelength characteristics as the optical characteristics synthesized by different film layers. A light attenuator which incorporates the element of the present invention is of particular use in optical system of wavelength division multiplex type.

Although in the embodiment mentioned above, a two-layer structure consisting of a Cr-film and a Ni-film has been described, it is not limited to the two-layer structure but may include three or more layers. The types of metal to be deposited by evaporation are not limited to the two described above.

## CLAIMS

1. A light attenuation element comprising a substrate (1) carrying an attenuat_ing deposit (2, 3) which includes a first metal which attenuates short wavelengths more strongly than long wavelengths and a second metal which attenuates long wavelengths more strongly than short wavelengths, characterised in that the first and second metals are deposited independently as individual laminated layers (2 and 3) on the substrate (1).

2. A light attenuation element according to claim 1, wherein the metals are chromium and nickel, characterised in that a chromium layer (2) is deposited on the substrate (1) and $a$ nickel layer (3) is deposited on the chromium layer.

FIG.1

FIG.2

0165015

FIG.3